# EUROPÄISCHE PATENTSCHRIFT

(11) **EP 0 995 204 B1**
(45) Veröffentlichungstag und Bekanntmachung des Hinweises auf die Patenterteilung: **10.04.2002**
(21) Anmeldenummer: 98944967.3
(22) Anmeldetag: 03.07.1998
(51) Int. Cl.: H01F 5/00

(54) **VORRICHTUNG ZUR HERSTELLUNG VON SPULEN BZW. SPULENGRUPPEN FÜR ELEKTROMOTOREN, GENERATOREN ODER DERGLEICHEN**
DEVICE FOR PRODUCING COILS OR COIL GROUPS FOR ELECTRIC MOTORS, GENERATORS OR SIMILAR
DISPOSITIF POUR LA PRODUCTION DE BOBINES OU DE GROUPES DE BOBINES POUR MOTEURS ELECTRIQUES, GENERATEURS OU AUTRES

(30) Priorität: 07.07.1997 DE 19728943
(43) Veröffentlichungstag der Anmeldung: 26.04.2000
(60) Teilanmeldung: 99126044.9
(73) Patentinhaber: Rist, Otto, 88255 Baienfurt (DE)
(72) Erfinder: RIST, Otto, D-88255 Baienfurt (DE); WESSLE, Anton, D-88284 Mochenwangen (DE)
(74) Vertreter: Patentanwälte Eisele, Otten & Roth
(86) Internationale Anmeldenummer: DE9801843
(87) Internationale Veröffentlichungsnummer: WO9903115

(56) Entgegenhaltungen:
- EP-A- 0 535 303
- DE-A- 4 403 919
- FR-A- 1 587 021
- US-A- 2 934 099
- US-A- 3 525 147
- US-A- 3 672 040
- US-A- 3 714 973
- US-A- 3 734 145
- US-A- 4 000 764
- US-A- 4 723 354

## Beschreibung

Die Erfindung betrifft eine Vorrichtung zur Herstellung von Spulen bzw. Spulengruppen für Elektromotoren oder dergleichen, insbesondere zum Wickeln von Spulen vor dem Einziehen in ein genutetes Statorpaket, nach dem Oberbegriff des Anspruchs 1.

Insbesondere beim Wickeln von Spulen vor dem Einziehen in ein entsprechend genutetes Statorpaket für einen Elektromotor, Generator usw. werden bereits mehrstufige Wickelschablonen verwendet, die wenigstens zwei Stufen mit unterschiedlich großem Umfang aufweisen. Diese Wickelschablonen werden an einen sogenannten Einziehkopf angefügt, woraufhin die gewünschten Spulen um die Wickelschablone herum gewickelt werden. Derartige Wickelschablonen bzw. die zugehörigen Vorrichtungen zum Herstellen der Spulen werden beispielsweise in der DE 28 08 048 oder auch in der DE 33 48 055 beschrieben. Die Wickelschablonen gemäß dieser Druckschriften bestehen aus zwei Hälften, die auseinander zu schieben sind, um unterschiedliche Größen der zu wickelnden Spulen einzustellen.

Bei den dort gezeigten Wickelschablonen kommt Stufe für Stufe zum Einsatz, wobei von der Stufe mit dem kleinsten Umfang ausgehend nacheinander jeweils um die nächst größere Stufe gewickelt wird. Hierbei wird jeweils die gewünschte Stufe der Wickelschablone in den Wickelbereich verfahren, wobei die zuvor benutzten Stufen mit kleinerem Umfang der Wickelschablone bzw. der am Einziehwerkzeug, einem sogenannten Einziehkopf, befindlichen Hälfte der Wickelschablone in das Einziehwerkzeug einfahren.

Damit dieses Einfahren der Wickelschablone in den Einziehkopf stattfinden kann, muss der Einziehkopf entsprechend lang ausgebildet werden. Dies hat nicht nur den Nachteil einer größeren Bauhöhe des Einziehkopfes zur Folge. Vielmehr können sich hierdurch die Einziehnadeln, die in dem Einziehkopf vorgesehen werden, mit zunehmender Länge leichter verbiegen, wodurch die Schlitze zwischen den Einziehnadeln nicht mehr das gewünschte Maß aufweisen und sich Probleme beim Einziehen der Spulen in das Statorpaket, insbesondere auch beim Aufsetzen des Statorpakets auf den Einziehkopf, ergeben können.

Weiterhin werden üblicherweise Abstreifer vorgesehen, um die Spulenwindungen während des Wickelvorgangs von der Wickelschablone in die Einziehnadeln des Einziehkopfes abzustreifen. Im Falle einer in den Einziehkopf eintauchenden Wickelschablone muss dieser Abstreifer unterschiedliche Weglängen zurücklegen. Der Abstreifer muss bei weit in den Einziehkopf eingetauchter Wickelschablone einen erheblich längeren Weg zurücklegen, als zu Beginn für das Abstreifen von der ersten Stufe notwendig ist.

Mit der Druckschrift US 371 973 ist eine Wickelvorrichtung zum Wickeln von Drahtspulen für Elektromotoren auf einer Wickelschablone mit zwei gegeneinander verfahrbaren Stufen bekannt geworden. Hierbei ist die Wickelschablone zweiteilig aufgebaut, wobei ein Teil von unten durch ein Speichermagazin zur Zwischenspeicherung gewickelter Spulen eingefahren ist. Die Vorrichtung ist geeignet, verschiedene Spulen nebeneinander in dem Speichermagazin abzulegen, das anschließend zu einem Einziehwerkzeug zur Übergabe der vorbereiteten Spulen gebracht wird. Von dieser Wickelvorrichtung kann keine Spule unmittelbar in das Einziehwerkzeug eingelegt werden.

Aus der Druckschrift FR 15 87 021 ist weiterhin eine Wickelvorrichtung bekannt geworden, bei der einzelne Nadeln auf einer drehbaren Plattform als Wickelkopf ausgebildet sind, von der jedoch nicht unmittelbar eine Spule in ein Einziehwerkzeug einzubringen ist.

Aufgabe der Erfindung ist es, eine Vorrichtung vorzuschlagen, die gegenüber dem vorbeschriebenen Stand der Technik eine kürzere Bauhöhe des Einziehkopfes und einen gleichmäßigen Hub des Abstreifers erlaubt.

Diese Aufgabe wird ausgehend von einer Vorrichtung der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass wenigstens zwei zueinander benachbarte Stufen wenigstens eines Teils der Wickelschablone gegeneinander verfahrbar ausgebildet sind und die Wickelschablone mit ihren Stufen in eine Wickelzone vor der freien Stirnseite von Einziehnadeln eines Einziehwerkzeugs verfahrbar ist. Auf diese Weise muss beim Absenken einer Stufe der Wickelschablone auf den Einziehkopf nicht zwangsweise die zuvor benutzte Stufe in den Einziehkopf einfahren. Die einzelnen Stufen könnten beispielsweise nacheinander vom Einziehkopf weg verfahren werden, wobei jedoch in einer besonders vorteilhaften Ausführungsform der Erfindung wenigstens zwei Stufen teleskopartig ineinander schiebbar ausgebildet werden. In dieser Ausführungsform ist durch Einziehen einer zuvor benutzten Stufe in eine nachfolgende Stufe bzw. das Überstülpen einer größeren nachfolgenden Stufe über die zuvor benutzte Stufe, die nachfolgende größere Stufe auf besonders günstige und wenig aufwendige Weise in die Wickelzone einzubringen, ohne dass die zuvor benutzte Stufe in den Einziehkopf einfährt.

In einer besonderen Ausführungsform werden alle Stufen der Wickelschablone verfahrbar und insbesondere teleskopartig ineinander schiebbar ausgebildet. Auf diese Weise können nacheinander entsprechend ihrer Umfangslänge alle Stufen an den Einziehkopf herangefahren werden. Im Falle der teleskopartigen Ausbildung schiebt sich hierbei die gesamte Wickelschablone bzw. der entsprechende Teil der Wickelschablone ineinander. Dies wird in einer vorteilhaften Ausführungsform durch eine Hubbewegung eines Schablonenträgers vorgenommen.

In einer weiteren vorteilhaften Ausführungsform werden zudem Haltemittel an einzelnen Stufen der Wickelschablone vorgesehen, um Einziehnadeln des Einziehkopfes zu halten. Diese Haltemittel, die beispielsweise in Form von Fixierstiften ausgebildet sein können, die in entsprechende Bohrungen der jeweiligen Einziehnadeln beim Absenken der verschiedenen Stufen der Wickelschablone einfahren können, fixieren diese Einziehnadeln an ihrem oberen Ende, so dass diese während des Einbringens der Spule in den Einziehkopf nicht verbogen werden können.

In einer besonders vorteilhaften Ausführungsform der Erfindung werden Rückstellmittel, beispielsweise in Form einer oder mehrerer Rückstellfedern, vorgesehen, um die Wickelschablone in die ausgefahrene Position zu drücken. Das Heranbringen der jeweils nächst größeren Stufe an den Einziehkopf kann in dieser Ausführungsform dadurch bewerkstelligt werden, dass die Wickelschablone an den Einziehkopf anschlägt und gegen die Rückstellkraft, wie oben aufgeführt, die Wickelschablone nach unten drückt, bis die jeweils gewünschte Stufe der Wickelschablone am Einziehkopf ankommt.

Es wäre jedoch auch denkbar, Antriebsmittel zum Verfahren der einzelnen Stufen vorzusehen. In Frage käme hier beispielsweise ein hydraulischer, pneumatischer oder elektromagnetischer Antrieb.

Bei einer erfindungsgemäßen Wickelschablone ergibt sich dadurch, dass die Wickelschablone stets mit der jeweils benutzten Stufe in Richtung zum Einziehkopf endet, der Vorteil, dass der Abstreifer nur den Hub durchführen muss, der zum Abstreifen von einer Stufe der Wickelschablone benötigt wird. Falls, wie dies vorteilhafterweise vorgesehen wird, jede Stufe in axialer Länge gleich lang ausgebildet ist, kann der Abstreifer für jede Stufe der Wickelschablone mit dem gleichen Hub verfahren werden.

Ein Ausführungsbeispiel der Erfindung wird in der Zeichnung dargestellt und anhand der Figuren nachfolgend näher erläutert.

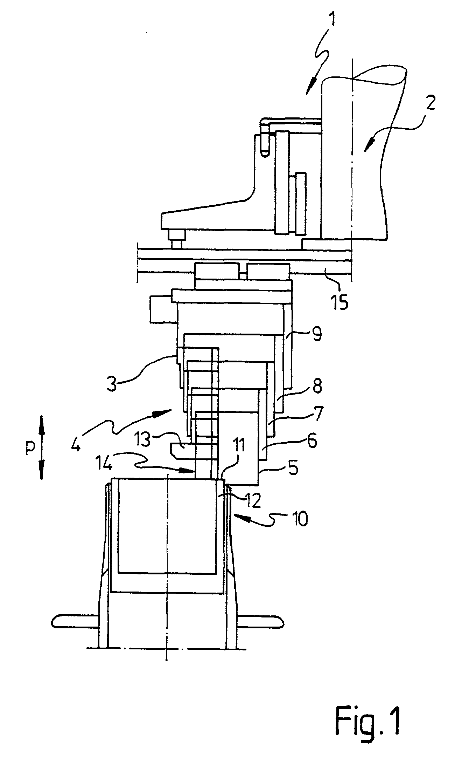

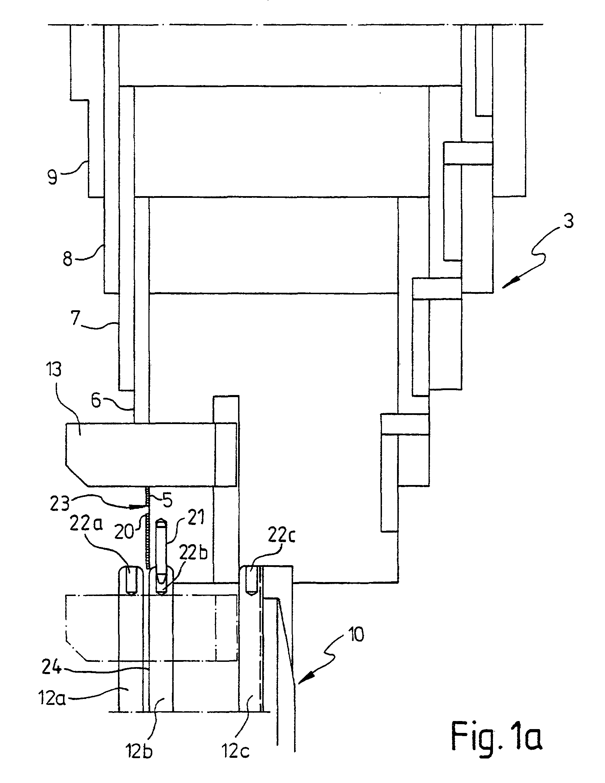

Im Einzelnen zeigen
- Fig. 1: einen schematischen Teilschnitt durch eine erfindungsgemäße Wickelvorrichtung und
- Fig. 1a: eine Teilvergrößerung aus Fig. 1.

In Fig. 1 ist eine Vorrichtung 1 zur Herstellung von Spulen oder Spulengruppen für Statoren von Elektromotoren schematisch dargestellt. An einer Hubeinheit 2 ist ein Schablonenträger 15 mit einer Wickelschablone 4 vorgesehen, von der in der Zeichnung eine Hälfte 3 abgebildet ist. Die andere, nicht näher dargestellte Hälfte der Wickelschablone 4 befindet sich von der Hälfte 3 beabstandet, wobei eine oder beide Hälften der Wickelschablone 4 an dem Schablonenträger 15 verfahrbar angeordnet sind, so dass der Abstand zwischen den beiden Hälften der Wickelschablone 4 variabel ist. So können in bekannter Weise unterschiedlich große Spulen gewickelt werden, indem der Abstand zwischen den beiden Schablonenhälften variiert wird.

Die Hälfte 3 der Wickelschablone 4 ist aus unterschiedlichen Stufen 5, 6, 7, 8, 9 aufgebaut, die teilweise ineinander gefügt und teleskopartig ineinander verfahrbar sind. Die einzelnen Stufen 5, 6, 7, 8 werden durch nicht näher dargestellte Rückstellmittel, z. B. Rückstellfedern, in die ausgefahrene Stellung gemäß Fig. 1 gedrückt.

Die unterste Stufe 5 liegt auf einem Einziehkopf 10 auf. Sie weist eine kleine Abstufung 11 auf, an die die Einziehnadeln 12 des Einziehkopfs 10 angefügt und fixiert sind.

Ein Abstreifer 13 durchsetzt alle Stufen der Wickelschablone 4. Er wird auf nicht näher dargestellte Weise in einer Hinund Herbewegung in axialer Richtung im Bezug zum Einziehkopf 10 (s. Doppelpfeil P) geführt und angetrieben.

Die herzustellende Spule wird in einer Wickelzone 14 unmittelbar oberhalb der Einziehnadeln 12 des Einziehkopfs 10 gebildet, indem eine Drahtführung, ein sogenannter Flyer (nicht näher dargestellt), mit dem Spulendraht um die Wickelschablone herum in einer rotierenden Bewegung geführt wird. Die einzelnen Stufen der Wickelschablone 4 sind so ausgebildet, dass ihre äußeren Ränder jeweils bündig mit einem zwischen den Einziehnadeln 12 des Einziehkopfs 10 gebildeten Schlitz abschließen. Der Abstreifer 13 kann auf diese Weise einzelne oder mehrere Windungen, die in der Wickelzone 14 aufgewickelt sind, nach unten abstreifen, wobei die entsprechenden Wicklungen der so gebildeten Spule in die Schlitze zwischen den Einziehnadeln 12 des Einziehkopfs 10 aufgenommen werden.

Nach Fertigstellung der Spule in der gewünschten, mit der untersten Stufe 5 zu fertigenden Größe wird die Hubeinheit 2 so weit betätigt, bis die nächste Stufe 6 in die Wickelzone 14 eingefahren ist und am Einziehkopf 10 anschlägt. Die nächst kleinere Stufe 5 bleibt stehen und fährt teleskopartig in die abgesenkte nächst größere Stufe 6 ein. Die Wickelschablone 4 dringt somit nicht in den Einziehkopf 10 ein, sondern verkürzt sich, wie beschrieben, durch die teleskopartige Ausbildung jeweils um das Maß, mit dem die Hubeinheit 2 die Wickelschablone 4 absenkt. Der Abstreifer 13 kann hierbei in seiner Position sowie in seiner Hublänge unverändert verbleiben.

Anschließend wird die nächst größere Spule auf der Stufe 6 gewickelt und wie die zuvor gebildete Spule in andere, weiter voneinander beabstandete Schlitze des Einziehkopfs 10 eingebracht.

Nach Fertigstellung dieser Spule wird analog verfahren, bis die größte gewünschte Stufe zum Einsatz gekommen ist.

Bei Bedarf können einzelne Stufen übersprungen werden, wobei der Verfahrweg der Hubeinheit 2 entsprechend gewählt wird.

Die nicht dargestellte weitere Hälfte der Wickelschablone 4 wird während des oben angeführten Herstellungsverfahrens ebenfalls stufenweise abgesenkt, bis sich die gewünschte Stufe auf Höhe der Wickelzone 14 befindet. Auch die nicht dargestellte weitere Hälfte der Wickelschablone 4 kann teleskopartig ineinander schiebbar ausgebildet sein. Sie kann jedoch grundsätzlich auch starr ausgeführt werden, da sie vom Einziehkopf entfernt liegt.

Durch die erfindungsgemäß gegeneinander verfahrbaren einzelnen Stufen 5, 6, 7, 8 wenigstens eines Teils 3 der Wickelschablone 4 können die Einziehnadeln 12 bzw. der gesamte Einziehkopf 10 kürzer ausgebildet werden als bei einer Ausführung, bei der die Wickelschablone bzw. der entsprechende Teil der Wickelschablone in den Einziehkopf 10 einfährt. Hierdurch wird insbesondere bei größeren Spulen eine korrekte Bearbeitung erst möglich, da schwere Spulen bei einer langen Ausführung der Einziehnadeln 12 diese häufig verbiegen, so dass das Aufsetzen des Statorpakets auf den Einziehkopf 10 im nächsten Arbeitsschritt erschwert oder völlig verhindert wird. Weiterhin kann der Abstreifer 13 stets mit dem gleichen Hub in der gleichen Position betrieben werden, wodurch sich ebenfalls der Aufwand in der Herstellung sowie in der Steuerung der erfindungsgemäßen Vorrichtung 1 vermindert.

In der vergrößerten Darstellung gemäß Fig. 1a ist die Hälfte 3 der Wickelschablone 4 mit ihren verschiedenen Stufen 5, 6, 7, 8, 9 vergrößert dargestellt. Verschiedene Einziehnadeln 12a, b, c eines nur teilweise dargestellten Einziehkopfs 10 sind unterhalb der Stufe 5 der Wickelschablone 4 angeordnet.

Ein Fixierstift 21, der an der Stufe 5 der Wickelschablone 4 befestigt ist, taucht in eine passende Bohrung 22b der Einziehnadel 12b ein. Hierdurch wird die Einziehnadel 12b an ihrem oberen Ende fixiert. Auf der der in Fig. 1a sichtbaren Seite des Einziehkopfes 10 gegenüberliegenden Seite ist die Stufe 5 mit einem weiteren, in der dargestellten Ansicht nicht sichtbaren Fixierstift versehen. Ebenso sind die übrigen Stufen 6, 7, 8, 9 mit solchen Fixierstiften versehen, die sich beim Absenken auf den Einziehkopf 10 in entsprechende Bohrungen 42a, b, c der zu der jeweils benutzten Stufe 5, 6, 7, 8, 9 passenden Einziehnadeln 12a, b, c, einfügen.

In Fig. 1a ist weiterhin eine Wicklung 23 aus mehreren Windungen des Spulendrahts der Spule 20 eingezeichnet. Der Abstreifer 13 befindet sich in seiner mit durchgezogenen Linien dargestellten Position oberhalb der Wicklung 23. In einer Abwärtsbewegung, in der sich der Abstreifer 13 in seine strichpunktierte Position 13' bewegt, wird die Wicklung 23 in den Spalt 24 zwischen den Einziehnadeln 12a, b eingeschoben. Die Fixierung durch die Fixierstifte 21 sorgt hierbei für eine starre Halterung der Fixiernadel 12b, so dass sich diese dabei nicht verbiegen kann.

### Bezugszeichenliste:

- 1: Vorrichtung
- 2: Hubeinheit
- 3: Hälfte
- 4: Wickelschablone
- 5: Stufe
- 6: Stufe
- 7: Stufe
- 8: Stufe
- 9: Stufe
- 10: Einziehkopf
- 11: Abstufung
- 12a,b,c: Einziehnadel
- 13: Abstreifer
- 14: Wickelzone
- 15: Schablonenträger
- 20: Spule
- 21: Fixierstift
- 22a,b,c: Bohrung
- 23: Wicklung
- 24: Spalt

## Patentansprüche

1. Vorrichtung (1) zum Herstellen von Spulen bzw. Spulengruppen für Elektromotoren, Generatoren oder dergleichen, insbesondere zum Wickeln von Spulen (20) vor dem Einziehen in ein genutetes Statorpaket, mit einer mehrstufigen Wickelschablone (4), die wenigstens zwei Stufen (5, 6, 7, 8, 9) mit unterschiedlich großem Umfang aufweist, wobei wenigstens zwei zueinander benachbarte Stufen (5, 6, 7, 8) wenigstens eines Teils der Wickelschablone (4) gegeneinander verfahrbar ausgebildet sind, **dadurch gekennzeichnet, dass** die Wickelschablone (4) mit ihren Stufen (5, 6, 7, 8, 9) in eine Wickelzone (14) vor der freien Stirnseite von Einziehnadeln (12a, b, c) eines Einziehwerkzeugs (10) verfahrbar ist.

2. Vorrichtung nach Anspruch 1 **dadurch gekennzeichnet, dass** alle Stufen (5, 6, 7, 8) gegenüber ihren benachbarten Stufen (5, 6, 7, 8) verfahrbar ausgebildet sind.

3. Vorrichtung nach einem der vorhergehenden Ansprüche **dadurch gekennzeichnet, dass** wenigstens zwei Stufen (5, 6,7, 8) teleskopartig ineinander schiebbar ausgebildet sind.

4. Vorrichtung nach einem der vorgenannten Ansprüche **dadurch gekennzeichnet, dass** alle Stufen (5, 6, 7, 8) teleskopartig ineinander schiebbar sind.

5. Vorrichtung nach einem der vorgenannten Ansprüche, **dadurch gekennzeichnet, dass** Haltemittel an einzelnen Stufen der Wickelschablone zum Halten von Einziehnadeln des Einziehkopfes vorgesehen sind.

6. Vorrichtung nach einem der vorgenannten Ansprüche **dadurch gekennzeichnet, dass** wenigstens zwei ineinander schiebbare Stufen (5, 6, 7, 8) durch eine Rückstellfeder in die ausgezogene Position gedrückt sind.

7. Vorrichtung nach einem der vorgenannten Ansprüche **dadurch gekennzeichnet, dass** Antriebsmittel für die einzelnen Stufen (5, 6, 7, 8) vorgesehen sind.

8. Wickelschablone (4) zur Herstellung von Elektromagneten, insbesondere zum Wickeln von Spulen (20) vor dem Einziehen in ein genutetes Statorpaket **dadurch gekennzeichnet, dass** sie nach einem der vorgenannten Ansprüche 5 bis 7 ausgebildet ist.

9. Verfahren zum Herstellen von Spulen bzw. Spulengruppen für Elektromotoren, Generatoren oder dergleichen, insbesondere zum Wickeln von Spulen (20) vor dem Einziehen in ein genutetes Statorpaket **dadurch gekennzeichnet, dass** eine Vorrichtung nach einem der vorgenannten Ansprüche verwendet wird.

10. Stator für einen Elektromotor, Generator oder dergleichen, **dadurch gekennzeichnet, dass** er mit einer Vorrichtung oder nach einem Verfahren nach einem der vorgenannten Ansprüche gefertigte Spulen bzw. Spulengruppen 20 aufweist.

## Claims

1. Device (1) for producing coils or coil groups for electric motors, generators or the like, in particular for winding coils (20) before the are drawn into a slotted stator packet, with a multi-stepped former (4), which has at least two steps (5, 6, 7, 8, 9) of different size, at least two steps (5, 6, 7, 8) which are adjacent to one another, of at least one part of the former (4) being designed to be movable relative to one another, **characterised in that** the former (4) with its steps (5, 6, 7, 8, 9) can be moved into a winding zone (14) upstream from the free end face of drawing-in needles (12a, b, c) of a drawing-in tool (10).

2. Device according to claim 1, **characterised in that** all the steps (5, 6, 7, 8) are designed to be movable relative to their adjacent steps (5, 6, 7, 8).

3. Device according to any one of the preceding claims, **characterised in that** at least two steps (5, 6, 7, 8) are designed to be telescopically displaceable into one another.

4. Device according to any one of the above-mentioned claims, **characterised in that** all the steps (5, 6, 7, 8) are telescopically displaceable into one another.

5. Device according to any one of the above-mentioned claims, **characterised in that** holding means are provided on individual steps of the former for holding drawing-in needles of the drawing-in head.

6. Device according to any one of the above-mentioned claims, **characterised in that** at least two steps (5, 6, 7, 8) which can be displaced into one another are pressed into the drawn-out position by a return spring.

7. Device according to any one of the above-mentioned claims, **characterised in that** drive means are provided for the individual steps (5, 6, 7, 8).

8. Former (4) for producing elctromagnets, in particular for winding coils (20) before being drawn into a slotted stator packet, **characterised in that** it is designed according to any one of the above-mentioned claims 5 to 7.

9. Method for producing coils or coil groups for electric motors, generators or the like, in particular for winding coils (20) before they are drawn into a slotted stator packet, **characterised in that** a device according to one of the above-mentioned claims is used.

10. Stator for an electric motor, generator or the like, **characterised in that** it has coils or coil groups (20) produced with a device or according to a method according to one of the above-mentioned claims.

## Revendications

1. Dispositif (1) pour fabriquer des bobines ou groupes de bobines pour des moteurs électriques, des générateurs ou analogues, en particulier pour enrouler des bobines (20) avant l'insertion dans un corps de stator à encoches, comportant un gabarit d'enroulement (4) à plusieurs étages, qui présente au moins deux étages (5, 6, 7, 8, 9) ayant des périphéries de tailles différentes, au moins deux étages voisins l'un de l'autre (5, 6, 7, 8) d'au moins une partie du gabarit d'enroulement (4) étant réalisés de façon mobile l'un par rapport à l'autre,
**caractérisé en ce que** le gabarit d'enroulement (4) avec ses étages (5, 6, 7, 8, 9) est déplaçable dans une zone d'enroulement (14) avant la face frontale libre d'aiguilles d'insertion (12a, b, c) d'un outil d'insertion (10).

2. Dispositif selon la revendication 1,
**caractérisé en ce que** tous les étages (5, 6, 7, 8) sont réalisés de façon déplaçable par rapport à leurs étages voisins (5, 6, 7, 8).

3. Dispositif selon une des revendications précédentes,
**caractérisé en ce qu'**au moins deux étages (5, 6, 7, 8) sont réalisés de façon déplaçable l'un dans l'autre de façon télescopique.

4. Dispositif selon une des revendications précitées,
**caractérisé en ce que** tous les étages (5, 6, 7, 8) peuvent être déplacés les uns dans les autres de façon télescopique.

5. Dispositif selon une des revendications précitées,
**caractérisé en ce que** des moyens de maintien sont prévus sur des étages individuels du gabarit d'enroulement pour maintenir des aiguilles d'insertion de la tête d'insertion.

6. Dispositif selon une des revendications précitées,
**caractérisé en ce qu'**au moins deux étages (5, 6, 7, 8) pouvant être déplacés l'un dans l'autre sont pressés par un ressort de rappel dans la position extraite.

7. Dispositif selon une des revendications précitées,
**caractérisé en ce que** des moyens d'entraînement pour les étages individuels (5, 6, 7, 8) sont prévus.

8. Gabarit d'enroulement (4) pour fabriquer des électroaimants, en particulier pour enrouler des bobines (20) avant l'insertion dans un corps de stator à encoches,
**caractérisé en ce qu'**il est réalisé selon une des revendications précitées 5 à 7.

9. Procédé pour fabriquer des bobines ou groupes de bobines pour des moteurs électriques, des générateurs ou analogues, en particulier pour enrouler des bobines (20) avant l'insertion dans un corps de stator à encoches,
**caractérisé en ce qu'**un dispositif selon une des revendications précitées est utilisé.

10. Stator pour un moteur électrique, générateur ou analogue,
**caractérisé en ce qu'**il présente des bobines ou groupes de bobines (20) réalisés par un dispositif ou selon un procédé suivant une des revendications précitées.
